# EUROPÄISCHE PATENTSCHRIFT

(11) **EP 0 426 789 B1**
(45) Veröffentlichungstag und Bekanntmachung des Hinweises auf die Patenterteilung: **07.01.1993**
(21) Anmeldenummer: 90906113.7
(22) Anmeldetag: 30.04.1990
(51) Int. Cl.: F16L 55/04

(54) **DEHNSCHLAUCH ZUR VERRINGERUNG VON DRUCKPULSATIONEN**
EXTENSIBLE HOSE FOR DAMPING PRESSURE PULSES
TUYAU SOUPLE POUR DIMINUER LES PULSATIONS DE PRESSION

(30) Priorität: 24.05.1989 CH 1949/89
(43) Veröffentlichungstag der Anmeldung: 15.05.1991
(73) Patentinhaber: ARDEN FINANZ AG, CH-6300 Zug (CH)
(72) Erfinder: VANTALLINI, Edoardo, I-20042 Albiate/Milano (IT)
(74) Vertreter: Troesch Scheidegger Werner AG
(86) Internationale Anmeldenummer: CH9000117
(87) Internationale Veröffentlichungsnummer: WO9014549

(56) Entgegenhaltungen:
- DE-A- 3 339 876
- DE-A- 3 510 267
- DE-A- 3 809 310

## Beschreibung

Die Erfindung betrifft einen Dehnschlauch gemäss Oberbegriff des Patentanspruchs 1. Derartige Dehnschläuche werden unter anderem in Servolenkungsanlagen von Kraftfahrzeugen eingesetzt, in denen der Dehnschlauch bei unterschiedlichen Arbeitsdrücken mit Aenderung des Schlauchvolumens durch Dehnung reagiert und dadurch die von der Pumpe ausgehenden Druckpulsationen verringert. Diese Reduzierung der Druckpulsationen hängt von der Länge, dem querschnitt und der Volumendehnung des Dehnschlauches ab. Da man jedoch beispielsweise bei einem Fahrzeug wegen des knappen zur Verfügung stehenden Platzes für den Einbau die vorgenannten Grössen nicht beliebig wählen kann, ist die angestrebte Reduzierung der Druckpulsationen in vielen Fällen nicht ausreichend.

Um bessere Ergebnisse zu erzielen, ist es bereits bekannt, in dem äusseren Dehnschlauch einen weiteren inneren flexiblen Schlauch anzuordnen, der einerseits an das einlassseitige Endstück angeschlossen ist und mit seinem anderen offenen Ende im äusseren Dehnschlauch frei endet. Ferner ist es auch bekannt, zusätzlich etwa auf der Mitte des äusseren Dehnschlauchs ein Drosselglied vorzusehen, durch welches sich der innere Schlauch hindurch erstreckt, und welches den äusseren Dehnschlauch in zwei durch einen Drosseldurchlass miteinander in Verbindung stehende Schlauchkammern unterteilt, wobei der Innenschlauch im Bereich der einlassseitigen ersten Kammer radiale Durchlässe in die erste Schlauchkammer aufweist. Ein solcher Schlauch ist z.B. aus der Schrift DE-A- 3 339 876 bekannt. Der Strömungswiderstand im Innenschlauch soll dabei zu einer Phasenverschiebung zwischen den beiden Hydraulikströmen in die einlassseitige und die auslassseitige Schlauchkammer führen, womit eine Pulsations- und Geräuschreduzierung erzielt wird.

Es wurde nun jedoch gefunden, dass dieser Aufwand zur Erreichung des angestrebten Ziels gar nicht notwendig ist. Ausserdem kann es bei dem bekannten Dehnschlauch problematisch sein, dass der innere Schlauch frei im äusseren Schlauch endet, da es hier auf das gewählte Material für den Innenschlauch ankommt, ob eine nicht kontrollierbare Lage der beiden Schläuche zueinander zu einer Beschädigung an der Innenseite des äusseren Schlauches führt, woraus schliesslich ein Defekt des Dehnschlauches resultiert, dessen Ursache nicht gleich erkennbar ist.

Der Erfindung lag daher die Aufgabe zugrunde, einen im konstruktiven Aufbau und in der Herstellung einfacheren Dehnschlauch mit den gleichen angestrebten Eigenschaften zu schaffen, bei dem ausserdem keine Gefahr einer Beschädigung durch die in Kontakt miteinander kommenden Schläuche besteht. Zur Lösung dieser Aufgabe weist der Dehnschlauch die Merkmale gemäss Anspruch 1 auf. Bei dieser Ausgestaltung ist der innere flexible Hohlkörper, der ein Schlauch oder ein flexibles Rohr sein kann, in dem auslassseitigen Endstück gehalten, wobei soviel Spiel vorhanden ist, dass durch den Ringspalt ein Rückstrom des Druckmediums in den Raum zwischen dem inneren und dem äusseren Schlauch auftritt. In diesen Raum gelangt das Druckmedium ausserdem durch die über die ganze Länge des inneren flexiblen Hohlkörpers verteilt angeordneten radialen Durchlassöffnungen.

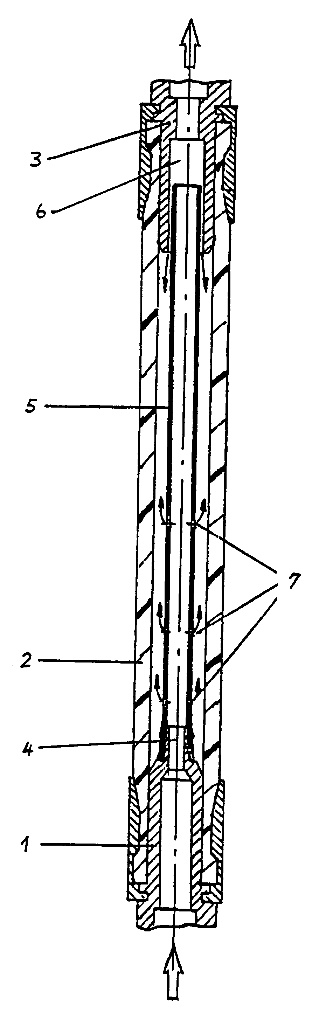

Die Erfindung wird nachfolgend anhand eines Ausführungsbeispiels näher erläutert. Die Zeichnung zeigt einen Längsschnitt durch einen Dehnschlauch.

An ein einlassseitiges Endstück 1 ist ein äusserer Druckschlauch mit hoher Volumenquerdehnung 2 angeschlossen, der an seinem anderen Ende mit einem auslassseitigen Endstück 3 fest verbunden ist. Das einlassseitige Endstück 1 weist ferner einen Nippelzapfen 4 auf, an welches ein koaxial zu dem äusseren Druckschlauch durch dieses sich hindurch erstreckender innerer flexibler Hohlkörper 5 angeschlossen ist, der ein flexibles Rohr, ein Schlauch oder auch ein schraubenlinienförmig gewikkelter Materialstrang sein kann. Dieser flexible Hohlkörper 5 erstreckt sich mit seinem Endbereich frei in den Auslasskanal 6 des auslassseitigen Endstücks 3 hinein und sein Aussendurchmesser ist kleiner als der ihn umschliessende Auslasskanal 6, sodass zwischen diesen ein ringförmiger Spalt vorhanden ist, sodass eine Rückströmung des Druckmediums durch den Spalt in den Raum zwischen dem inneren Hohlkörper und dem äusseren Druckschlauch stattfindet. Ferner gelangt das Druckmedium in diesen Raum auch vom inneren flexiblen Hohlkörper 5 aus durch in diesem vorhandene radiale Durchlassöffnungen 7, die in diesem über die ganze Länge in axialen Abständen verteilt angeordnet sind. Die Grösse dieser Durchlassöffnungen, deren Anzahl und Abstand werden für den jeweiligen Anwendungsfall festgelegt.

Ein Dehnschlauch dieser Art wird insbesondere für Servolenkungsanlagen von Kraftfahrzeugen verwendet. Bei dem hier beschriebenen Dehnschlauch treten wechselseitige Druckveränderungen auf, die zu einer erheblichen Reduzierung der Druckpulsationen führen. Die Grösse dieser Reduzierung ist von der Länge und Volumendehnung des äusseren Druckschlauches 1, vom Arbeitsdruck sowie von den Abmessungen des flexiblen inneren Hohlkörpers 5 sowie ferner von den Abmessungen und der Lage der radialen Durchlassöffnungen 7 abhängig. Bei optimaler Abstimmung lässt sich in bestimmten Druck- und Strömungsbereichen ein fast pulsationsfreier Strom des Druckmediums erreichen. Da der innere flexible Hohlkörper 5 in dem auslassseitigen Endstück 3 gehalten ist, kann der äussere Schlauch auch nicht beschädigt werden, wie es bei bekannten Dehnschläuchen mit einem frei im äusseren Schlauch endenden inneren Schlauch möglich ist.

## Patentansprüche

1. Dehnschlauch zur Verringerung von in Hydrauliksystemen von der Pumpe ausgelösten Druckpulsationen und damit verbundenen Geräuschen, insbesondere für Servolenkungsanlagen von Kraftfahrzeugen, mit einem an ein einlassseitiges Endstück und ein auslassseitiges Endstück angeschlossenen äusseren Druckschlauch mit hoher Volumenquerdehnung und einem koaxial zu diesem angeordneten, zum Leiten eines Druckmediums geeigneten inneren flexiblen Hohlkörper, der einlassseitig an einen Nippelzapfen des einlassseitigen Endstücks angeschlossen ist und mindestens über eine Teillänge zur Aussenseite hin Oeffnungen aufweist, dadurch gekennzeichnet, dass der innere flexible Hohlkörper (5) sich bis in das auslassseitige Endstück (3) in dessen Auslasskanal (6) frei hineinerstreckt und sein Aussendurchmesser kleiner ist als der ihn umschliessende Auslasskanal (6).

2. Dehnschlauch nach Anspruch 1, dadurch gekennzeichnet, dass der innere flexible Hohlkörper (5) ein flexibles Rohr oder Schlauch mit über die gesamte Länge verteilt angeordneten radialen Durchlassöffnungen (7) ist.

3. Dehnschlauch nach Anspruch 1, dadurch gekennzeichnet, dass der innere flexible Hohlkörper (5) aus einem schraubenlinienförmig gewickelten Materialstrang mit druckabhängiger Längendehnungsfähigkeit zwecks Varierung der Spaltgrösse zwischen den Materialstrangwindungen besteht.

## Claims

1. Extendible hose for reducing pressure pulses, and noise associated therewith, initiated by the pump in hydraulic systems, particularly for servo-assisted steering systems in motor vehicles, with an external pressure hose of high volume expansion connected to an end piece on the inlet side and to an end piece on the outlet side, and an internal flexible hollow body suitable for conveying a pressure medium arranged coaxially with the external pressure hose, which body is connected on the inlet side to a nipple pin of the inlet-side end piece and has outwardly directed openings over at least part of its length, characterised in that the inner flexible hollow body (5) extends freely into the outlet-side end piece (3) in the outlet channel (6) of the latter and has an outer diameter which is smaller than the outlet channel (6) surrounding it.

2. Extendible hose according to claim 1, characterised in that the internal flexible hollow body (5) is a flexible pipe or hose with radial through-holes (7) arranged in a distributed manner over its whole length.

3. Extendible hose according to claim 1, characterised in that the internal flexible hollow body (5) consists of a helically wound section of material with pressure-dependent longitudinal expandibility for the purpose of varying the size of the gap between the turns of the material section.

## Revendications

1. Tuyau flexible pour diminuer des pulsations de pression déclenchées dans des systèmes hydrauliques par la pompe ainsi que les bruits associés, notamment dans des dispositifs de commande assistée de véhicules, comprenant un tuyau sous pression externe raccordé à une pièce extrême côté entrée et une pièce extrême côté sortie et présentant une dilatation transversale de volume élevée, et un corps creux interne flexible disposé coaxialement à ce dernier et approprié pour conduire un fluide sous pression, qui est raccordé côté entrée à un tourillon à nipple de la pièce extrême côté entrée et qui présente au moins sur une longueur partielle des ouvertures vers le côté sortie, caractérisé en ce que le corps creux interne flexible (5) s'étend librement jusque dans la pièce extrême côté sortie (3) dans le conduit de sortie (6) de celui-ci, et que son diamètre externe est plus petit que le conduit de sortie (6) qui l'entoure.

2. Tuyau souple selon la revendication 1, caractérisé en ce que le corps creux interne flexible (5) est un tube ou tuyau flexible présentant des ouvertures de passage radiales (7) réparties sur toute la longueur.

3. Tuyau souple selon la revendication 1, caractérisé en ce que le corps creux interne flexible (5) est constitué d'un écheveau de matériau enroulé suivant une forme hélicoïdale et présentant une capacité d'expansion ou de dilatation longitudinale qui est fonction de la pression pour varier la grandeur de fente entre les spires ou tours de l'écheveau de matériau.
